# EUROPÄISCHE PATENTSCHRIFT

(11) **EP 3 620 758 B1**
(45) Veröffentlichungstag und Bekanntmachung des Hinweises auf die Patenterteilung: **17.11.2021**
(21) Anmeldenummer: 19195067.4
(22) Anmeldetag: 03.09.2019
(51) Int. Cl.: G01G 19/32, G01G 19/36, G01G 11/08, G01G 13/24

(54) **GRAVIMETRISCHE DOSIERVORRICHTUNG FÜR SCHÜTTGÜTER**
GRAVIMETRIC DOSING DEVICE FOR BULK GOODS
DISPOSITIF DE DOSAGE GRAVIMÉTRIQUE POUR PRODUITS EN VRAC

(30) Priorität: 10.09.2018 DE 102018121965
(43) Veröffentlichungstag der Anmeldung: 11.03.2020
(73) Patentinhaber: iNOEX GmbH Innovationen und Ausrüstungen für die Extrusionstechnik, 49324 Melle (DE)
(72) Erfinder: NEUMEISTER, Arno, 32457 Porta Westfalica (DE)
(74) Vertreter: Bremer, Ulrich

(56) Entgegenhaltungen:
- EP-A1- 0 519 193
- DE-A1- 10 108 706

## Beschreibung

Die vorliegende Erfindung betrifft eine gravimetrische Dosiervorrichtung für Schüttgüter gemäß dem Oberbegriff des Anspruchs 1.

Eine gattungsgemäße Dosiervorrichtung ist in der EP 0 472 949 B1 beschrieben worden. Bei derartigen, nach dem Loss-in-Weight-Prinzip arbeitenden Vorrichtungen ist ein Mischrohr das zentrale verfahrenstechnische Bauteil. Es wird in ein Halsstück eingebaut, dessen Auslass in eine Verarbeitungsmaschine, z. B. einen Extruder, führt.

Grundsätzlich funktioniert eine Dosiervorrichtung für mehrere Komponenten auch ohne Mischrohr. Allerdings hat die Verwendung eines Mischrohres Vorteile. So müssen die Nebenkomponenten nicht gegen einen Materialstrom hinzudosiert werden, wodurch Dosiermotoren und Dosierschnecken nicht so stark belastet werden. Des Weiteren liegt im Ausgang des Halsstückes immer eine konstante Materialsäule vor. Ein im Auslauf des Mischrohres angeordneter Prallkegel fächert die Hauptkomponente auf und gibt durch die Auffächerung den Nebenkomponenten einen größeren Platz, sich mit der Hauptkomponente zu vermischen. Das Verhältnis von minimaler Hauptkomponente zur Summe aller Nebenkomponenten wird durch den Durchmesser des Mischrohres bestimmt.

In der Praxis gibt es je nach Rezept, Schüttdichte und Fließeigenschaften für viele Anwendungsfälle unterschiedliche Mischrohre. Diese Mischrohre müssen dann bei wechselnden Anwendungen ausgetauscht werden. Hierzu muss die Produktion gestoppt, müssen die Restmaterialien aus der Dosiervorrichtung entfernt und muss das Mischrohr ausgetauscht werden. Anschließend muss dann neues Material in die Dosiervorrichtung gegeben und die Produktion wieder gestartet werden.

Die DE 101 08 706 A1 und die EP 0 519 193 A1 beschreiben ähnliche Vorrichtungen, bei denen allerdings keine Mischrohre zum Einsatz kommen.

Aufgabe der vorliegenden Erfindung ist es, den Umrüstaufwand in der Dosiervorrichtung bei wechselnden Anwendungen zu verringern.

Diese Aufgabe wird erfindungsgemäß mit einer Vorrichtung gelöst, die die Merkmale des Anspruchs 1 aufweist.

Da das Mischrohr erfindungsgemäß in seiner Länge verstellbar ist, kann der Abstand des Auslaufes des Mischrohres vom Ausgang des Halsstückes variiert werden. Dabei kann jede Zwischenposition zwischen geringstem und größtem Abstand individuell eingestellt werden, um je nach Rezeptur den optimalen Materialfluss der Hauptkomponente einzustellen. Die Verstellung des Mischrohres in seiner Länge kann bei laufender Produktion erfolgen.

Zusätzlich oder alternativ zur Längenverstellbarkeit des Mischrohres kann dieses auch in seinem Durchmesser verstellt werden. Dabei kann die Durchmesseränderung über die gesamte Länge des Mischrohres erfolgen, oder aber auch nur durch eine Verjüngung am Auslauf des Mischrohres. Durch eine Verringerung des Durchmessers des Mischrohres wird der Massedurchlass der Hauptkomponente reduziert und die Summe aller Nebenkomponenten anteilsmäßig erhöht. Dabei können Verhältnisse von Hauptkomponente zur Summe aller Nebenkomponenten von < 1 erreicht werden.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: eine Dosierstation mit in der Länge verstellbarem Mischrohr, welches in seiner größten Länge dargestellt ist,
- Fig. 2: eine Darstellung gemäß Figur 1 bei in kürzester Länge gezeigtem Mischrohr,
- Fig. 3: eine Dosiervorrichtung mit einem Mischrohr mit verjüngtem Auslauf, und
- Fig.4: einen Blick von unten auf den Auslass eines Mischrohres mit verjüngtem Auslauf bei weggelassenem Prallblech im vergrößerten Maßstab.

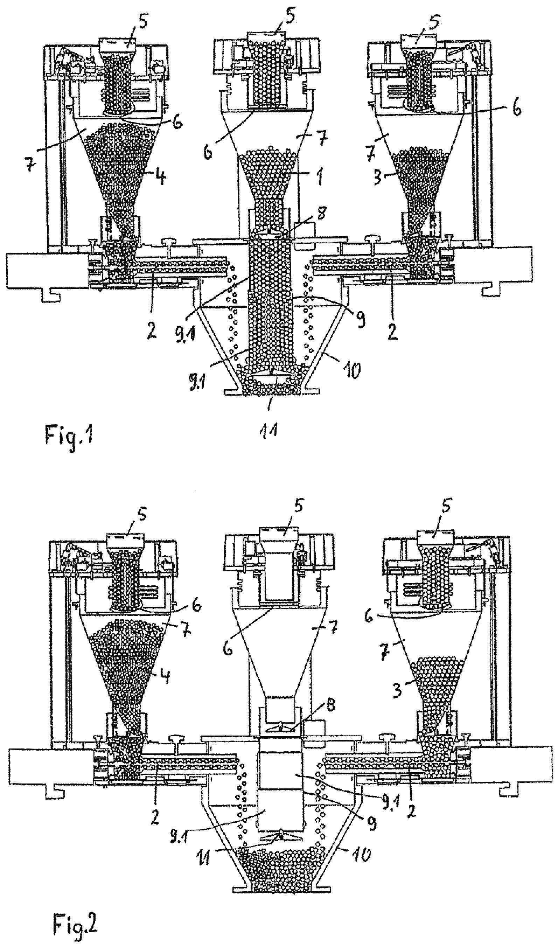

Figur 1 zeigt eine nach dem Loss-in-Weight-Prinzip arbeitende Dosiervorrichtung mit einer frei fallenden Hauptkomponente 1 und zwei über Dosierschnecken 2 zugeführten Nebenkomponenten 3 und 4. Der Vorteil einer frei fallenden Hauptkomponente 1 liegt darin, dass die Produktion nicht abreißen kann, solange Hauptkomponentenmaterial vorhanden ist.

Die Dosiervorrichtung weist für jede der Komponenten 1, 3 und 4 einen Nachfüllbehälter 5 mit einer Bodenöffnung auf, die durch ein Ventil 6 verschließbar ist. Der Nachfüllbehälter 5 jeder Komponente 1, 3 und 4 mündet jeweils in einen Wiegebehälter 7.

Der Wiegebehälter 7 der Hauptkomponente 1 mündet über ein Prallblech 8 in ein Mischrohr 9. Das Mischrohr 9 ist in ein Halsstück 10 eingebaut. Der durch die abströmende Hauptkomponente 1 verursachte Gewichtsverlust im Wiegebehälter 7 wird ständig erfasst. Beim Erreichen eines bestimmten Füllstandes wird das Ventil 6 des zugehörigen Nachfüllbehälters 5 geöffnet und der Wiegebehälter 7 wieder aufgefüllt.

Gleiches passiert mit den Nebenkomponenten 3 und 4. Diese werden ebenfalls mittels Loss-in-Weight-Verwiegung, allerdings nicht freifallend sondern durch die Dosierschnecken 2, gravimetrisch rezepturgetreu in das Halsstück 10 gefördert.

Das Mischrohr 9 ist als Teleskoprohr ausgeführt. Es kann somit durch Ineinanderschieben bzw. Auseinanderziehen seiner teleskopierten Rohrabschnitte 9.1 in seiner Länge variiert werden. In Figur 1 ist das Mischrohr 9 in seiner vollen Länge ausgefahren. Die Dosiervorrichtung kann mit dieser Anordnung mit einem großen Anteil an Hauptkomponente 1 gefahren werden.

Ein am Auslauf des Mischrohres 9 angeordneter Prallkegel 11 fächert die Hauptkomponente 1 auf und gibt durch die Auffächerung den Nebenkomponenten 3 und 4 einen größeren Platz, sich mit der Hauptkomponente 1 zu vermischen.

In einer Ausführungsform der Erfindung, die in der Zeichnung nicht dargestellt ist, kann der Abstand des Prallkegels 11 vom Auslauf des Mischrohres 9 verstellt werden. Je größer der Abstand desto mehr Hauptkomponente 1 kann gefahren werden. Des Weiteren kann bei größerem Abstand gröber geschreddertes Material oder allgemein gröberes Material zugegeben werden.

Figur 2 zeigt das Mischrohr 9 in seiner kleinsten Länge. Bei dieser Einstellung wird die Dosiervorrichtung nur mit den zwei Nebenkomponenten 3 und 4 betrieben.

Die Längsverstellung des Mischrohres 9 kann elektrisch oder pneumatisch erfolgen. Dabei kann jede Zwischenposition zwischen der größten und der kleinsten Länge individuell eingestellt werden, um je nach Rezeptur den optimalen Materialfluss der Hauptkomponente 1 einzustellen.

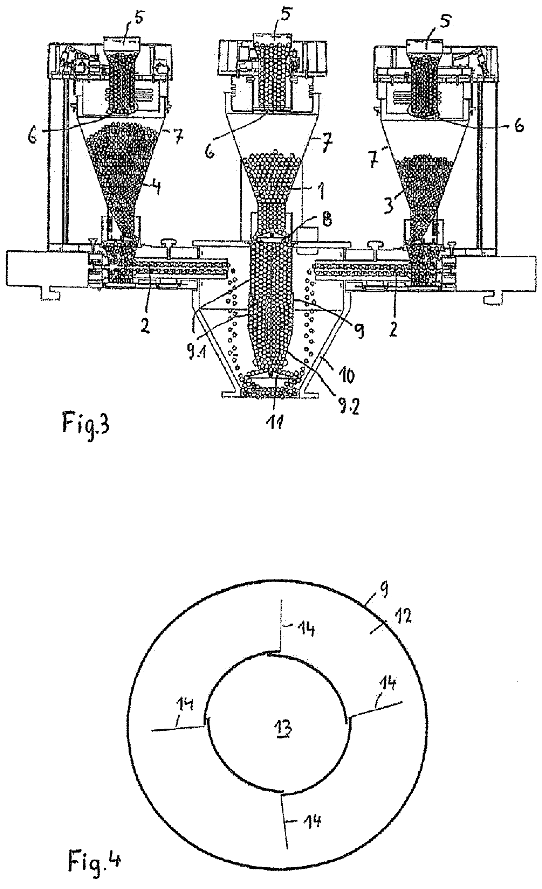

Figur 3 entspricht der Darstellung gemäß Figur 1 mit dem Unterschied, dass das Mischrohr 9 hier mit einem konischen Auslauf 9.2 versehen ist. Der konische Auslauf 9.2 ist durch ein Kegelblech 12 (Fig. 4) gebildet, welches sich einstückig an einen Rohrabschnitt 9.1 des Mischrohres 9 anschließt. Das Kegelblech 12 besitzt eine Auslassöffnung 13, von deren Rand radiale Einschnitte 14 nach außen geführt sind. Durch radialen Druck auf das Kegelblech 12, z. B. mittels einer auf dessen Außenseite angelegten Manschette (nicht dargestellt) überlappen sich die Randbereiche der Einschnitte 14, so dass die Auslassöffnung 13 kleiner oder bei verringertem Druck größer wird. Durch Verringerung der Auslassöffnung 13 wird der Massedurchlass der Hauptkomponente 2 reduziert und die Summe aller Nebenkomponenten 3, 4 dadurch anteilsmäßig erhöht.

Alternativ zu dem eingeschnittenen Kegelblech 12 kann der konische Auslauf 9.2 aus einem gebogenen, sich überlappenden Blech bestehen, welches am Auslauf durch radialen Druck weiter zusammengequetscht wird. Des Weiteren ist es auch möglich, für den konischen Auslauf 9.2 mehrere gebogene Bleche zu verwenden, die ineinander geschoben werden.

## Patentansprüche

1. Gravimetrische Dosiervorrichtung für Schüttgüter, bei der eine Hauptkomponente (1) einem Mischrohr (9) zugeführt wird, welches in ein Halsstück (10) eingebaut ist, dessen Ausgang in eine Verarbeitungsmaschine, z. B. einen Extruder, führt, **dadurch gekennzeichnet, dass** das Mischrohr (9) in seiner Länge und/oder seinem Durchmesser verstellbar ist.

2. Gravimetrische Dosiervorrichtung nach Anspruch 1, **dadurch gekennzeichnet, dass** das Mischrohr (9) als Teleskoprohr mit mindestens zwei Rohrabschnitten (9.1) ausgeführt ist.

3. Gravimetrische Dosiervorrichtung nach Anspruch 1, **dadurch gekennzeichnet, dass** das Mischrohr (9) mit einem konischen Auslauf (9.2) versehen ist, der eine Auslassöffnung (13) aufweist, die durch radialen Druck in ihrem Durchmesser veränderbar ist.

4. Gravimetrische Dosiervorrichtung nach einem der vorstehenden Ansprüche, **dadurch gekennzeichnet, dass** am Auslauf des Mischrohres (9) ein Prallkegel (11) angeordnet ist, der die Hauptkomponente (1) auffächert.

5. Gravimetrische Dosiervorrichtung nach Anspruch 4, **dadurch gekennzeichnet, dass** der Abstand des Prallkegels (11) vom Auslauf des Mischrohres (9) einstellbar ist.

## Claims

1. Gravimetric dosing device for bulk goods, where a main component (1) is fed to a mixing tube (9) installed in a neck part (10) the output of which leads to a processing machine, e.g. an extruder, **characterised in that** the mixing tube (9) is adjustable in its length and/or its diameter.

2. Gravimetric dosing device according to claim 1, **characterised in that** the mixing tube (9) is designed as a telescopic tube having at least two tube sections (9.1).

3. Gravimetric dosing device according to claim 1, **characterised in that** the mixing tube (9) is provided with a conical outlet (9.2) having an outlet opening (13) which can be altered in its diameter by means of radial pressure.

4. Gravimetric dosing device according to one of the above claims, **characterised in that** a deflector cone (11) is arranged at the outlet of the mixing tube (9) fanning out the main component (1).

5. Gravimetric dosing device according to claim 4, **characterised in that** the distance of the deflector cone (11) from the outlet of the mixing tube (9) is adjustable.

## Revendications

1. Dispositif pour le dosage gravimétrique de matériaux en vrac, dans lequel un composant principal (1) est amené à un tube de mélange (9) qui est incorporé dans un élément de col (10), dont la sortie débouche dans une machine de traitement, par exemple, une extrudeuse, **caractérisé en ce que** le tube de mélange est réglable en longueur et/ou diamètre.

2. Dispositif pour le dosage gravimétrique suivant la revendication 1, **caractérisé en ce que** le tube de mélange (9) est conçu comme tube télescopique avec au moins deux sections tubulaires (9.1).

3. Dispositif pour le dosage gravimétrique suivant la revendication 1, **caractérisé en ce que** le tube de mélange (9) est pourvu d'une sortie conique (9.2) qui présente une ouverture de sortie (13) dont le diamètre peut être modifié par pression radiale.

4. Dispositif pour le dosage gravimétrique suivant une des revendications précédentes, **caractérisé en ce qu'à** la sortie du tube de mélange (9) est disposé un cône déflecteur (11) qui disperse le composant principal (1) en forme d'éventail.

5. Dispositif pour le dosage gravimétrique suivant la revendication 4, **caractérisé en ce que** l'écart du cône déflecteur (11) par rapport à la sortie du tube de mélange (9) est réglable.
